# EUROPÄISCHE PATENTSCHRIFT

(11) **EP 0 710 769 B1**
(45) Veröffentlichungstag und Bekanntmachung des Hinweises auf die Patenterteilung: **26.05.1999**
(21) Anmeldenummer: 95117381.4
(22) Anmeldetag: 04.11.1995
(51) Int. Cl.: F01N 7/18, F16L 55/033

(54) **Elastische Aufhängung und Verfahren zur Herstellung einer elastischen Aufhängung**
Elastic suspension and method for manufacturing a elastic suspension
Suspension élastique et procédé de fabrication d'une suspension élastique

(30) Priorität: 07.11.1994 DE 4439630
(43) Veröffentlichungstag der Anmeldung: 08.05.1996
(73) Patentinhaber: WOCO Franz-Josef Wolf & Co., D-63628 Bad Soden-Salmünster (DE)
(72) Erfinder: Wolf, Franz Josef, D-63629 Bad Soden-Salmünster (DE); Heckmann, Gerhard, D-36381 Schlüchtern (DE); Kalkhof, Volker, D-63571 Gelnhausen (DE); Kaminski, Peter, D-63571 Gelnhausen (DE); Setiawan, Lucas, Dr., D-63619 Bad Orb (DE)
(74) Vertreter: Jaeger, Klaus, Dr.

(56) Entgegenhaltungen:
- EP-A- 0 315 804
- EP-A- 0 485 734
- EP-A- 0 529 250
- EP-A- 0 531 193
- DE-A- 2 658 358

## Beschreibung

Die vorliegende Erfindung betrifft eine elastische Aufhängung zur Anordnung schwingender Bauteile, insbesondere der Abgasleitung der Brennkraftmaschine eines Kraftfahrzeuges gemäß dem Oberbegriff des Anspruchs 1, wie bereits aus der DE 26 58 358 A1 bekannt. Die Erfindung betrifft ebenfalls ein Verfahren zur Herstellung einer elastischen Aufhängung gemäß dem Oberbegriff des Anspruchs 6.

In allen Bereichen des Maschinenbaus, in denen massebehaftete Körper rotatorischen oder translatorischen Bewegungen oszillierend unterworfen werden, entstehen aufgrund der Massenkräfte dieser Körper selbsterregte Schwingungen, die aufgrund der körperlichen Verbindungen dieser Massen in Form erzwungener fremderregter Schwingungen auf die Umgebung übertragen werden. Als Beispiel hierfür ist die Brennkraftmaschine eines Kraftfahrzeuges zu nennen, deren Bauteile Längs-, Biege- und Torsionsschwingungen ausführen. Diese Körperschall hervorrufenden Schwingungen werden auch auf die mit der Brennkraftmaschine regelmäßig weitgehend starr verbundene Abgasleitung übertragen, denen auch noch vom intermittierenden Verbrennungsvorgang und durch Druckspitzen erzeugte Schwingungen überlagert werden, so daß die Abgasleitung von Schwingungen beaufschlagt ist, die sie im Falle einer starren Verbindung mit der Karosserie des Kraftfahrzeuges auf den Innenraum des Kraftfahrzeuges in Form störenden Körperschalls übertragen würde.

Zur Vermeidung der Übertragung dieser Schwingungen ist aus der DE 26 58 358 Al bereits eine elastische Aufhängung für die Abgasleitung der Brennkraftmaschine eines Kraftfahrzeuges bekannt, die eine Elastomerschlaufe aufweist mit einer darin angeordneten und in sich geschlossenen Einlage.

Diese Einlage dient dabei dazu, die Zugfestigkeit der bekannten elastischen Aufhängung zu erhöhen, wobei die Einlage dieser bekannten elastischen Aufhängung aus Stahldraht oder aus einem Federstahlband besteht.

Die Anordnung dieser bekannten elastischen Aufhängung geschieht nun derart, daß ein hakenartiger Fortsatz am Unterboden der Karosserie in einen Schlitz innerhalb stegartiger Verstrebungen der bekannten elastischen Aufhängung eingreift, während die Abgasleitung der Brennkraftmaschine über einen Haken in einen zweiten derartigen Schlitz eingreift.

Wenn ein mit dieser bekannten elastischen Aufhängung versehenes Kraftfahrzeug so betrieben wird, daß die Abgasleitung hohe Schwingungsamplituden aufweist, was beispielsweise beim Befahren unwegsamen Geländes der Fall sein kann, kommt es aufgrund der geschilderten großen Amplitude zu einer großen Zugbelastung der bekannten elastischen Aufhängung und damit zu einer Verhärtung, da die Einlage in Form des Stahldrahts oder des Federstahlbandes im wesentlichen nicht zu einer elastischen Verformung in der Lage ist, so daß ein starres Gebilde entsteht, welches nicht mehr in der Lage ist, die Übertragung der von der Abgasleitung stammenden Schwingungen auf die Karosserie des Kraftfahrzeuges zu verhindern mit der Folge, daß die somit übertragenen Störamplituden zum Körperschall und nach der Fortpflanzung dieses Körperschalls zu einem deutlich erhöhten Geräuschpegel im Fahrgastinnenraum führen.

Zudem weist die bekannte elastische Aufhängung den Nachteil auf, daß sie aufgrund der regelmäßigen Anordnung an der Karosserieunterseite aufgrund der metallischen Einlage korrossionsanfällig ist.

Der vorliegenden Erfindung liegt zur Beseitigung der geschilderten Nachteile die Aufgabe zugrunde, eine elastische Aufhängung zu schaffen, welche die Übertragung von Störamplituden schwingender Bauteile auf die Umgebung vermeidet, von geringem Gewicht ist und eine kostengünstige Herstellung gestattet. Gleichzeitig soll ein Verfahren zur Herstellung einer deratigen elastischen Aufhängung geschaffen werden.

Die Erfindung weist zur Lösung dieser Aufgabe hinsichtlich der elastischen Aufhängung die im Anspruch 1 angegebenen Merkmale auf. Vorteilhafte Ausgestaltungen hiervon sind in den weiteren Ansprüchen beschrieben. Gleichzeitig weist die Erfindung zur Lösung der Aufgabe hinsichtlich des Verfahrens die im Anspruch 6 angegebenen Merkmale auf.

Erfindungsgemäß ist eine elastische Aufhängung zur Anordnung schwingender Bauteile, insbesondere zur Anordnung der Abgasleitung der Brennkraftmaschine eines Kraftfahrzeuges vorgesehen, wobei die Aufhängung eine Elastomerschlaufe und eine darin angeordnete in sich geschlossene Einlage aufweist, bei der die Einlage einen elastisch verformbaren Tragkörper aufweist, an dessen Außenumfang ein durch Reibschluß mit dem Tragkörper verbundener Kunststoffaden (7) aufgewickelt ist. Es bedeutet dies mit anderen Worten, daß innerhalb des Querschnitts der beispielsweise ringförmig ausgebildeten Elastomerschlaufe eine Einlage angeordnet ist, die aus einem elastisch verformbaren Tragkörper gebildet ist, auf dessen Außenumfang ein Kunststoffaden angeordnet ist, so daß eine elastische Aufhängung geschaffen ist, die innerhalb weitester Grenzen normaler Beanspruchung im Bereich ihrer aufgrund elastischer Verformung geleisteten Formänderungsarbeit verbleibt. Die Anordnung des zugkraftaufnehmenden Kunststoffadens am Außenumfang des Tragkörpers ist dabei so getroffen, daß eine Stoffschlußverbindung zwischen dem Tragkörper und dem Kunststoffaden nicht zustandekommt. In gleicher Weise stellt sich ebenfalls eine derartige Stoffschlußverbindung zwischen dem Kunststoffaden und der diesen umgebenden Elastomerschlaufe ebenfalls nicht ein, so daß bei einer sich im Belastungsfall der elastischen Aufhängung ergebenden Verformungsbewegung der aus Elastomerschlaufe, elastisch verformbaren Tragkörper und zugkraftaufnehmenden Kunststoffaden gebildeten Anordnung nicht die Gefahr eines Einreißens der Elastomerschlaufe aufgrund unterschiedlicher Längenausdehnungen der Einzelbestandteile besteht. Es kann sich also die so gebildete elastische Aufhängung in allen Richtungen elastisch verformen, ohne daß sich die Elastomerschlaufe, der elastisch verformbare Tragkörper und der zugkraftaufnehmende Kunststoffaden durch eine dazwischen geschaffene Stoffschlußverbindung gegenseitig an einer Bewegung hindern, was einerseits zur Gefahr des Reißens der Elastomerschlaufe und andererseits auch zur Verhärtung der elastischen Aufhängung und damit zu einer erhöhten Neigung der Übertragung störender Störamplituden führen würde.

Dies leitet sich davon ab, daß sowohl die den Hauptbestandteil der elastischen Aufhängung bildende Elastomerschlaufe einer elastischen Verformung unterliegt, die von einer elastischen Verformung des Tragkörpers und einer elastischen Verformung des Kunststoffaden überlagert wird, so daß im Vergleich mit der bekannten elastischen Aufhängung eine Verhärtung nicht auftritt.

Zwischen dem zugkraftaufnehmenden Kunststoffaden und dem Tragkörper sowie der Elastomerschlaufe findet damit lediglich eine Reibschlußverbindung statt, es kommt zwischen diesen einzelnen Komponenten nicht zu einer Stoffschlußverbindung. Die geschilderte Reibschlußverbindung wird auch im belasteten Zustand der erfindungsgemäßen elastischen Aufhängung aufrechterhalten, so daß im Belastungsfall auch kein Formschluß zwischen den einzelnen Komponenten stattfindet. Es bedeutet dies, daß es zwischen dem Kunststoffaden und der Elastomerschlaufe nicht zu einem Gummi-Nichtmetallkörper-Verbund kommt.

Der Kunststoffaden kann dabei ein am Tragkörper endlos aufgewickelter Kunststoffaden sein, so daß in Fortführung der Erfindung die Zugkraftaufnahme durch diesen aufgewickelten Kunststoffaden in weiten Bereichen durch eine im Belieben des Fachmanns liegende Windungszahl des Kunststoffadens am Tragkörper einstellbar ist.

Es ist von Vorteil, daß die Belastbarkeit der erfindungsgemäßen elastischen Aufhängung durch die Werkstoffeigenschaften und/oder die Windungszahl und/oder die Querschnittsabmessungen des Kunststoffadens und/oder die Geometrie der Elastomerschlaufe einstellbar ist. Es heißt dies, daß die erfindungsgemäße elastische Aufhängung an jede denkbare Belastungsstruktur anpaßbar ist durch eine Kombination beispielsweise der Werkstoffeigenschaften und der Windungszahl des am Tragkörper aufgewickelten Kunststoffadens und die Geometrie der Elastomerschlaufe. Hierdurch ist die Steifigkeit der erfindungsgemäßen elastischen Aufhängung an die jeweiligen Verhältnisse unterschiedlicher Kraftfahrzeuge anpaßbar, ohne daß es erforderlich ist, jeweils für jeden Kraftfahrzeugtyp eine konstruktiv eigenständige Lösung zu suchen, da beispielsweise durch eine Modifikation der Windungszahl des am Tragkörper aufgewickelten Kunststoffadens die Zugkraftbelastbarkeit und die Steifigkeit der elastischen Aufhängung einstellbar ist.

Neben diesen Vorteilen weist die erfindungsgemäße elastische Aufhängung noch den weiteren Vorteil auf, daß im Vergleich mit der bekannten elastischen Aufhängung die Korrosionsgefahr vollständig beseitigt ist, da die elastische Aufhängung gemäß der Erfindung auf metallische Komponenten vollständig verzichtet. Hierdurch kann außerdem eine deutliche Gewichtseinsparung erzielt werden, einhergehend mit niedrigen Kosten durch die einfache Herstellung der erfindungsgemäßen elastischen Aufhängung, wie dies weiter untenstehend noch im einzelnen beschrieben werden wird.

Die elastische Aufhängung gemäß der Erfindung kann dabei einen weitgehend ringförmig oder oval ausgebildeten Tragkörper aufweisen mit sich U-förmig nach radial auswärts gerichtet erstreckenden Schenkeln, so daß das Herstellungsverfahren noch dadurch vereinfacht wird, daß ein Abgleiten des am Tragkörper aufgewickelten Kunststoffadens vom Tragkörper verhindert wird, da der daran endlos aufgewickelte Kunststoffaden von den Schenkeln des sich so insgesamt U-förmig ergebenden Profils am Abgleiten vom Tragkörper gehindert wird.

Ganz allgemein wird durch die erfindungsgemäße elastische Aufhängung der Vorteil einer deutlich höheren Festigkeit erzielt, als sie bei einer Schlaufe ohne die Einlage anzutreffen ist, so daß die elastische Aufhängung nach der Erfindung eine 6 bis 10 mal höhere Festigkeit als die Schlaufe ohne Einlage aufweist.

Gemäß der Erfindung ist weiterhin ein Verfahren zur Herstellung einer elastischen Aufhängung mit einer Elastomerschlaufe und einer darin angeordneten in sich geschlossenen Einlage vorgesehen, das die folgenden Schritte aufweist.

In einem ersten Verfahrensschritt wird der Kunststoffaden am Außenumfang eines nicht metallischen, elastisch verformbaren Tragkörpers zur Bildung der Einlage angeordnet, gefolgt von einem zweiten Schritt, dem Umgeben der Einlage mit einem Elastomerwerkstoff zur Bildung einer an weitgehend der mittigen Hauptnormalebene der Elastomerschlaufe geteilten ersten Elastomerschlaufenhälfte, in welche die Einlage eingebettet ist. Es heißt dies, daß die Einlage nach Vollzug dieses zweiten Verfahrensschrittes von einer Elastomerschlaufenhälfte umgeben ist, die in einem Hauptnormalschnitt einer Hälfte der späteren vollständigen Elastomerschlaufe entspricht, Hierzu kann beispielsweise der elastisch verformbare Tragkörper als eigenständiges Bauteil mit einem Kunststoffaden in einem eigenständigen Herstellungsvorgang kostengünstig vorab gefertigt werden, so daß auch ein einfach ausgebildetes Fertigbauteil zum Einsatz kommen kann.

Als nächster Verfahrensschritt schließt sich hieran das Ausbilden einer zur ersten Elastomerschlaufenhälfte komplementär ausgebildeten zweiten Elastomerschlaufenhälfte an, wobei die erste und zweite Elastomerschlaufenhälfte dann zur Bildung der Elastomerschlaufe zusammengeführt werden. Die so gebildete Anordnung wird dann einem Vulkanisationsvorgang unterzogen, so daß eine elastische Aufhängung geschaffen ist mit einer entsprechenden nichtmetallischen Einlage ohne daß es erforderlich ist, ein besonderes Haftsystem in die Aufhängung einzubringen. Das Weglassen eines eigenständigen Haftsystems bedeutet in diesem Zusammenhang, daß zwischen der Elastomerschlaufe, dem elastisch verformbaren Tragkörper und dem zugkraftaufnehmenden Kunststoffaden keine Stoffschlußverbindungen vorgesehen sind, so daß die Gefahr des Einreißens der Elastomerschlaufe nicht mehr gegeben ist.

Es macht dies auch deutlich, daß hierdurch ein ausgesprochen günstiges Herstellungsverfahren geschaffen ist, da es sich durch einfache Verfahrensschritte auszeichnet.

Es ist daher eine elastische Aufhängung geschaffen, die sich gegenüber der bekannten elastischen Aufhängung durch eine deutliche Gewichtseinsparung auszeichnet, keinerlei Korrosion unterliegt, aufgrund des Fehlens des Verhärtens der elastischen Aufhängung eine gute Akkustik bietet, da sie die Übertragung von Störamplituden von der Abgasleitung auf die Karosserie des Kraftfahrzeuges vermeidet und neben der Möglichkeit der kostengünstigen Herstellung auch noch die Möglichkeit der Einstellung der Quersteifigkeit der erfindungsgemäßen elastischen Aufhängung und damit die Anpaßbarkeit an jeden möglichen Belastungsfall erlaubt.

Die Erfindung wird im folgenden anhand der Zeichnung näher erläutert. Diese zeigt in
- Fig.1: eine elastische Aufhängung mit schematisch dargestellter Einlage in Draufsichtdarstellung und
- Fig. 2: im Schnitt entlang I-I nach Fig. 1;
- Fig. 3: schematisch zwei Schritte zur Herstellung der elastischen Aufhängung und
- Fig. 4: einen weiteren Verfahrensschritt bzw. die fertiggestellte elastische Aufhängung in einem Schnitt nach II-II gemäß Fig. 1.

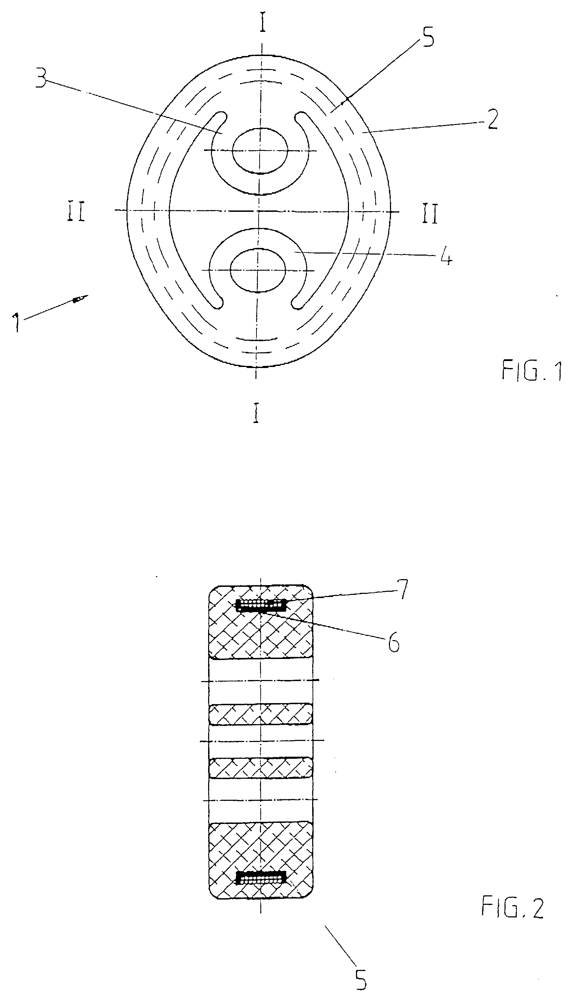

Wie leicht aus Fig. 1 der Zeichnung ersichtlich, weist die elastische Aufhängung 1 im dargestellten Ausführungsbeispiel im wesentlichen eine oval bzw. elliptisch ringförmig ausgebildete Elastomerschlaufe 2 auf, wobei im Bereich innerhalb der elliptisch ringförmig ausgebildeten Kontur der Elastomerschlaufe 2 zwei kreisringförmig ausgebildete Anordnungsvorichtungen 3, 4 vorgesehen sind, die mit der Elastomerschlaufe 2 einstückig verbunden sind und der Aufnahme des schwingenden Bauteils bzw. der Anordnung der so gebildeten elastischen Aufhängung 1 an einer nicht dargestellten Lastaufnahmeeinrichtung dienen, die beispielsweise eine sich von der Karosserieunterseite eines Kraftfahrzeuges erstreckende Hakeneinrichtung sein kann.

Wie leicht ersichtlich, ist innerhalb der Elastomerschlaufe 2 in stilisiert dargestellter Weise eine Einlage 5 vorgesehen, die einen nichtmetallischen Werkstoff aufweist.

Die näher in Fig. 2 der Zeichnung dargestellte Einlage 5 weist einen elastisch verformbaren Tragkörper 6 und einen an dessen Außenumfang angeordneten zugkraftaufnehmenden Nichtmetallkörper in Form eines daran aufgewickelten Kunststoffadens 7 auf. Der Tragkörper 6 kann dabei ein an der Kontur der Elastomerschlaufe 2 entsprechend konturierter Kunststoffringkörper sein.

Der Kunststoffaden 7 ist dabei am elastisch verformbaren Tragkörper 6 in einer solchen Windungsanzahl oder Schlingenanzahl angeordnet, daß er eine entsprechend dem jeweiligen Anwendungsfall ausreichende Zugkraft aufnehmen kann, so daß die so gebildete elastische Aufhängung hohe Kräfte aufnehmen kann und auch als Endbegrenzung der Schwingungsbewegung der nicht dargestellten Abgasanlage wirken kann, da eine in Längsrichtung der elastischen Aufhängung 1 wirkende Kraftbeaufschlagung zunächst zu einer Verringerung der Breite im Querschnitt II-II nach Fig. 1, also einer gewissen Einschnürung führt, so daß ab einer gewissen Belastungshöhe auf den am Tragkörper 6 aufgewickelten Kunststoffaden 7 eine Zugkraftbelastung wirkt, welche dieser dann aufnimmt. Im Falle geringerer Belastungen kommt die zugkraftaufnehmende Einlage 5 jedoch in geringerem Umfang als Kraftaufnahmeeinrichtung zum Einsatz, so daß die so gebildete elastische Aufhängung 1 eine solche Elastizität aufweist, wie sie auch eine Aufhängung ohne jegliche Einlage besitzt, so daß eine weiche Federkennlinie erzielbar ist.

Die Anordnung des Kunststoffadens 7 am querschnittlich U-förmig ausgebildeten Tragkörper 6 geschieht dabei derart, daß der Kunststoffaden endlos am Tragkörper 6 aufgewickelt wird, ohne daß dabei ein Haftsystem zum Einsatz kommt, d.h. also ohne daß eine Stoffschlußverbindung zwischen dem Tragkörper 6 und dem Kunststoffaden 7 vorgesehen ist, so daß auf den Einsatz von die Stoffschlußverbindung herstellenden Lösungsmitteln vollständig verzichtet werden kann, so daß es auch ermöglicht ist, die elastische Aufhängung in umweltfreundlicher Weise herzustellen, da Lösungsmittel hierzu nicht zum Einsatz gelangen müssen und eine aufwendige mehrstufige Vorbehandlung des Kunststoffadens nicht notwendig ist.

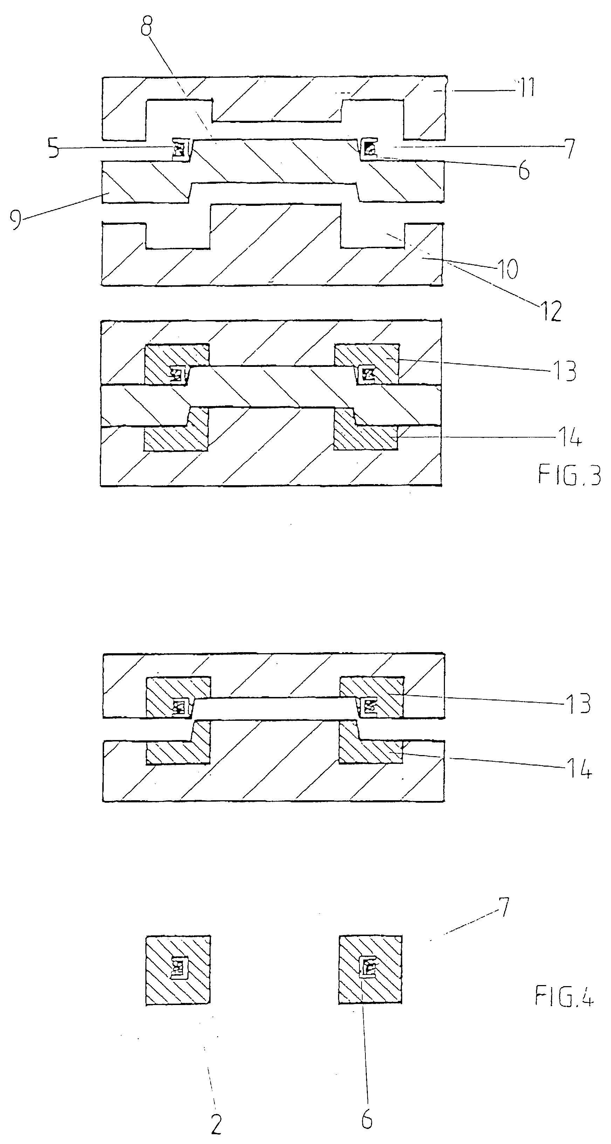

Das Verfahren zur Herstellung der elastischen Aufhängung ist in schematischer Weise in Fig. 3 und 4 der Zeichnung dargestellt.

Der erste Verfahrensschritt besteht darin, den Kunststoffaden am elastisch verformbaren Tragkörper zur Bildung der Einlage aufzuwickeln. Fig. 3 der Zeichnung zeigt hierzu in der oberen der beiden Darstellungen den im Schnitt U-förmig ausgebildeten Tragkörper 6 mit einem daran bereits ohne den Einsatz von Lösungsmitteln angeordneten und aufgewickelten Kunststoffaden 7. Die so gebildete Einlage 5 wird an den kreisringförmig ausgebildeten Abschnitt 8 einer Formzwischenplatte 9 angelegt. Unterhalb der Formzwischenplatte 9 ist ein unterer Formwerkzeugkörper 10 angeordnet, dem oberhalb der Formzwischenplatte 9 ein entsprechend ausgebildeter Formwerkzeugkörper 11 gegenüberliegt. Beide Formwerkzeugkörper 10, 11 weisen dabei eine entsprechend der späteren elastischen Aufhängung entsprechende Profilierung bzw. Kontur in Form von Ausnehmungen 12 auf.

Nach Absenken des oberen Formwerkzeugkörpers 11 auf die Formzwischenplatte 9 mit dazwischen innerhalb der Ausnehmung 12 angeordneter Einlage 5 und einem entsprechenden Anheben des Formwerkzeugkörpers 10 gegen die Formzwischenplatte 9 wird in die Ausnehmungen 12 Elastomerwerkstoff eingebracht, welcher die Ausnehmungen 12 vollständig verfüllt, so daß die Einlage 5 im Bereich ihres oberhalb der Formzwischenplatte 9 angeordneten Außenbereiche vom Elastomerwerkstoff vollständig umgeben ist.

In entsprechender Weise werden auch die zwischen der Formzwischenplatte 9 und dem Formwerkzeugkörper 10 gebildeten Ausnehmungen 12 mit Elastomerwerkstoff verfüllt, indem beispielsweise Elastomerwerkstoff eingespritzt wird, wobei eine Verbindung zwischen dem Elastomerwerkstoff und der Einlage durch ein Einleiten eines Vulkanisationsvorgangs hergestellt wird.

In einem weiteren, aus der oberen Hälfte der Fig. 4 der Zeichnung schematisch ersichtlichen Verfahrensschritt wird die so gebildete erste Elastomerschlaufenhälfte 13 zusammen mit der eingebetteten Einlage 5 von der Formzwischenplatte 9 getrennt und mit der flächen- und formkomplementär zur ersten Elastomerschlaufenhälfte 13 ausgebildeten zweiten Elastomerschlaufenhälfte 14 zusammengeführt und unter Wärmezufuhr ausvulkanisiert. Nach Beendigung des so durchgeführten Vulkanisationsvorgangs kann die elastische Aufhängung 1 der Form entnommen werden und es ergibt sich die der unteren Hälfte der Fig. 4 der Zeichnung ersichtliche in einer Querschnittsdarstellung dargestellte Struktur der elastischen Aufhängung 1.

Die so geschaffene elastische Aufhängung 1 zeichnet sich durch ein geringes Gewicht aus, da auf metallische Bestandteile verzichtet wurde, sie verfügt über eine hohe Beständigkeit, da sie gegenüber Korrosionseinflüssen unempfindlich ist, sie vermeidet die Übertragung von von der Abgasanlage stammender Störamplituden auf die Karosserie des Kraftfahrzeuges, sie läßt sich aufgrund der beliebigen Windungszahl des am Tragkörper 6 aufgewickelten Kunststoffadens 7 hinsichtlich ihrer Steifigkeit beliebig einstellen und ist durch ein kostengünstiges und umweltfreundliches Herstellungsverfahren herstellbar, da der Kunststoffaden 7 auf dem elastischen Tragkörper 6 aufgewickelt wird, ohne daß es hierzu des Einsatzes eines Haftsystems, beispielsweise in Form von Lösungsmitteln bedarf, die in einem Vulkanisationsvorgang zur Bildung einer Stoffschlußverbindung führen würden. Zudem weist die so gebildete elastische Aufhängung eine hohe Kraftaufnahmefähigkeit auf und besitzt eine Endbegrenzung durch die Kraftaufnahme mittels der eingebetteten Einlage, die elastische Aufhängung besitzt eine der Aufhängung ohne Einlage entsprechende Elastizität, da auf metallische Teile verzichtet wurde und läßt sich hinsichtlich ihrer Steifigkeitsanforderungen über die Geometrieauslegung der Elastomerschlaufe und des elastischen Tragkörpers einstellen.

## Patentansprüche

1. Elastische Aufhängung zur Anordnung schwingender Bauteile, insbesondere der Abgasleitung der Brennkraftmaschine eines Kraftfahrzeuges, mit einer Elastomerschlaufe (2) und einer darin angeordneten in sich geschlossenen Einlage (5),
dadurch **gekennzeichnet**,
daß die Einlage (5) einen nichtmetallischen, elastisch verformbaren Tragkörper (6) aufweist, an dessen Außenumfang ein zugkraftaufnehmender durch Reibschluß mit dem Tragkörper verbundener Kunststoffaden (7) aufgewickelt ist.

2. Elastische Aufhängung nach Anspruch 1,
dadurch **gekennzeichnet**,
daß der Kunststoffaden (7) in beliebiger Windungsanzahl am Tragkörper (6) aufbringbar ist.

3. Elastische Aufhängung nach einem der Ansprüche 1 oder 2,
dadurch **gekennzeichnet**,
daß die Belastbarkeit der Aufhängung (1) durch die Werkstoffeigenschaften und/oder die Windungszahl und/oder die Querschnittsabmessungen des Kunststoffadens (7) und/oder die Geometrie der Elastomerschlaufe (1) einstellbar ist.

4. Elastische Aufhängung nach einem der Ansprüche 1 bis 3,
dadurch **gekennzeichnet**,
daß die Elastomerschlaufe (2) zwei daran einstückig angeformte oder ausgeformte ringförmige Anordnungsvorrichtungen (3, 4) zur Aufnahme des schwingenden Bauteils und/oder zur Anordnung der Aufhängung (1) an einer Lastaufnahmeeinrichtung aufweist.

5. Elastische Aufhängung nach einem der Ansprüche 1 bis 4,
dadurch **gekennzeichnet**,
daß der Tragkörper (6) eine ringförmige Struktur mit sich U-förmig nach radial auswärts gerichtet erstreckenden Schenkeln aufweist, so daß ein Abgleiten des am Tragkörper aufgewickelten Kunststoffadens vom Tragkörper verhindert wird.

6. Verfahren zur Herstellung einer elastischen Aufhängung nach einem des Ansprüche 1 bis 5 **gekennzeichnet** durch
folgende Schritte:
- Anordnen des Kunststoffadens am Außenumfang des elastisch verformbaren Tragkörpers zur Bildung der Einlage
- Umgeben der Einlage mit einem Elastomerwerkstoff zur Bildung einer an weitgehend der mittigen Hauptnormalebene der Elastomerschlaufe geteilten ersten Elastomerschlaufenhälfte, in welche die Einlage eingebettet ist
- Ausbilden einer zur ersten Elastomerschlaufenhälfte komplementär ausgebildeten zweiten Elastomerschlaufenhälfte
- Zusammenführen der ersten und zweiten Elastomerschlaufenhälfte zur Bildung der Elastomerschlaufe und
- Vulkanisieren der so gebildeten Anordnung.

## Claims

1. Elastic suspension for mounting vibrating components, especially for mounting the exhaust pipe of the internal combustion engine of a motor vehicle, comprising an elastomer loop (2) and a continuous inset (5) provided therein,
**characterized** in that
the inset (5) comprises a non-metallic elastically workable sustainer (6), on the outer periphery of which a tension-reducing synthetic fiber (7) is wound up in frictional engagement with the sustainer (6).

2. Elastic suspension according to claim 1,
**characterized** in that
the synthetic fiber (7) is attachable in any number of turns.

3. Elastic suspension according to one of claims 1 or 2,
**characterized** in that
the load carrying ability of the suspension (1) is adjustable due to the material propterties and/or the number of turns and/or the dimensions of the cross-section of the synthetic fiber (7) and/or the geometry of the elastomer loop (2).

4. Elastic suspension according to one of claims 1 to 3,
**characterized** in that
the elastomer loop (2) comprises two ring-shaped mounting devices (3,4) continuously configurated or bonded thereat for receiving the vibrating component and/or for mounting the suspension (1) at a load suspension device.

5. Elastic suspension according to one of claims 1 to 4,
**characterized** in that
the sustainer (6) comprises an annular structure with U-shaped sides extending in radial outward directions, thus preventing the synthetic fiber wound up on the sustainer from sliding off.

6. Method for manufacturing an elastic suspension according to one of claims 1 to 5,
**characterized** in that
it comprises the following steps:
- mounting the synethetic fiber on the outer periphery of the elastically workable sustainer for the formation of the inset;
- surrounding the inset with an elastomer for the formation of a first half of the elastomer loop which is essentially partitioned in the central normal main plane of the elastomer loop, in which the inset is embedded;
- formation of a second half of the elastomer loop which is complementary to the first half of the elastomer loop;
- bringing both elastomer loop halves together for the formation of the elastomer loop; and
- vulcanizing the so-formed arrangement.

## Revendications

1. Suspension élastique pour installer des pièces de construction soumises à des oscillations, en particulier le collecteur d'échappement d'un véhicule automobile, comportant un étrier en élastomère (2) et un insert (5) fermé sur lui-même, disposé à l'intérieur, **caractérisée en ce que** l'insert (5) présente un corps porteur (6) non métallique déformable élastiquement, à la périphérie extérieure duquel est enroulée une mèche de matière plastique (7) reprenant les efforts et liée au corps porteur (6) par une adhésion par frottement.

2. Suspension élastique suivant la revendication 1, **caractérisée en ce que** la mèche de matière plastique (7) peut être montée sur le corps porteur (6) suivant le nombre de spires que l'on souhaite.

3. Suspension élastique suivant l'une des revendications 1 ou 2, **caractérisée en ce que** la capacité de charge de la suspension (1) peut être réglée par les propriétés de la matière et/ou par le nombre de spires et/ou par les dimensions de la section de la mèche de matière plastique (7) et/ou par la géométrie de l'étrier en élastomère (2).

4. Suspension élastique suivant l'une des revendications 1 à 3, **caractérisée en ce que** l'étrier en élastomère (2) présente deux dispositifs de mise en place (3, 4) de forme annulaire, rapportés sur lui ou réalisés en une seule pièce avec lui, destinés à recevoir la pièce soumise à oscillations et/ou destinés à positionner la suspension (1) sur un dispositif reprenant les efforts.

5. Suspension élastique suivant l'une des revendications 1 à 4, **caractérisée en ce que** le corps porteur (6) présente une structure annulaire comportant des branches s'étendant, en formant un U, radialement vers l'extérieur, de façon à empêcher la mèche de matière plastique, enroulée sur le corps porteur, de glisser de ce corps porteur.

6. Procédé de fabrication d'une suspension élastique suivant l'une des revendications 1 à 5, **caractérisé par** les étapes suivantes :
- Disposer la mèche de matière plastique sur la périphérie extérieure du corps porteur déformable élastiquement, pour former l'insert.
- Entourer l'insert avec une matière élastomère pour former une première moitié de l'étrier d'élastomère, séparée largement du plan principal médian de l'étrier d'élastomère, et dans laquelle l'insert est enrobé.
- Former une deuxième moitié d'étrier d'élastomère ayant une forme complémentaire de la première moitié de l'étrier d'élastomère.
- Assembler la première et la deuxième moitié d'étrier d'élastomère pour former l'étrier d'élastomère et
- Vulcaniser le dispositif ainsi formé.
